# EUROPÄISCHE PATENTANMELDUNG

(11) **EP 4 830 940 A1**
(43) Veröffentlichungstag der Anmeldung: **28.10.2026**
(21) Anmeldenummer: 25172048.8
(22) Anmeldetag: 23.04.2025
(51) Int. Cl.: B44C 5/04, B44F 9/02, G06N 3/08, G06N 20/00

(54) **VERFAHREN UND COMPUTERPROGRAMM ZUM ERSTELLEN VON FERTIGUNGSDATEN ZUR HERSTELLUNG EINES DEKORS SOWIE VERFAHREN ZUR HERSTELLUNG EINER HOLZWERKSTOFFPLATTE**

(71) Anmelder: SWISS KRONO Tec AG, 6003 Luzern (CH)
(72) Erfinder: Dicke, Sebastian, 16868 Bantikow (DE)
(74) Vertreter: Gramm, Lins & Partner Patent- und Rechtsanwälte PartGmbB

(57) **Zusammenfassung**

Die Erfindung betrifft ein Verfahren zum Erstellen von Fertigungsdaten zur Herstellung eines Dekors auf einer Holzwerkstoffplatte, wobei das Verfahren die folgenden Schritte umfasst:
- Bereitstellen eines maschinellen Lernsystems, das einen Zusammenhang von mindestens einer Dekoreigenschaft als Eingabedaten und Dekorbilddaten als Ausgabedaten maschinell gelernt hat, auf einer Datenverarbeitungsanlage,
- Bereitstellen von mindestens einer gewünschten Dekoreigenschaft des herzustellenden Dekors auf der Datenverarbeitungsanlage,
- Eingeben der mindestens einen bereitgestellten Dekoreigenschaft als Eingabedaten in das auf der Datenverarbeitungsanlage bereitgestellten maschinellen Lernsystem und Erhalten von Dekorbilddaten als Ausgabedaten aus dem maschinellen Lernsystem in Reaktion auf die Eingabe, und
- Erstellen von Fertigungsdaten zur Herstellung des Dekors in Abhängigkeit von den erhaltenen Dekorbilddaten.

## Beschreibung

Die Erfindung betrifft ein Verfahren zum Erstellen von Fertigungsdaten zur insbesondere automatisierten Herstellung eines Dekors auf einer Holzwerkstoffplatte. Die Erfindung betrifft ebenso ein Computerprogramm hierzu.

Die Erfindung betrifft außerdem ein Verfahren zur Herstellung einer Holzwerkstoffplatte mit einem Dekor, indem Fertigungsdaten zur Herstellung des Dekors erstellt und dann in Abhängigkeit von den Fertigungsdaten mittels einer Fertigungsanlage das Dekor hergestellt wird.

Es ist seit langem bekannt, Oberflächen von Gegenständen, insbesondere von Papierbahnen, für verschiedene Zwecke mit einem Druckmotiv, dem sogenannten Dekor, zu bedrucken. Beispielsweise werden bedruckte Papierbahnen zur Herstellung von Paneelen oder Platten verwendet, die als Fußbodenbeläge, Wandverkleidungen, Deckenverkleidungen oder Möbelplatten Verwendung finden können. Dabei kann entweder das Dekor direkt auf die Holzwerkstoffplatten oder eine Grundierung auf der Platte aufgebracht werden oder das Dekor wird auf einen Dekorträger, beispielsweise ein Dekorpapier, aufgebracht, der später auf die Holzwerkstoffplatte aufgebracht, beispielsweise auflaminiert oder aufgeklebt wird. Insbesondere bei der Produktion von Fußbodenpaneelen ist es erwünscht und äußert vorteilhaft, wenn die mit dem Dekor bedruckten Druck-Oberflächen keine farblichen Abweichungen zueinander aufweisen, da zur Verwendung als Bodenbelag häufig Produkte unterschiedlicher Herstellungschargen miteinander verbunden und verlegt werden. Es muss daher sichergestellt werden, dass sich die Dekore der Paneele aus unterschiedlichen Chargen nicht voneinander unterscheiden. Dies gilt auch im Falle von Anschlusslieferungen, die beispielsweise erforderlich sein können, wenn ein defektes Paneel oder Produkt ausgetauscht werden muss.

Derartige Verfahren sind unter der Bezeichnung indirekter Druck oder indirekter Digitaldruck bekannt. Die Digitaldruckanlage wird verwendet, um die jeweilige Drucktinte nicht direkt auf den zu bedruckenden Gegenstand, sondern auf die Übertragungswalze aufzubringen, die in mechanischen Kontakt mit der zu bedruckenden Oberfläche gebracht wird und dabei die aufgebrachte Tinte auf die zu bedruckenden Oberfläche des Gegenstandes überträgt. Ein solches Verfahren ist beispielsweise aus der EP 2 636 531 A1 bekannt. Dabei wird in der Digitaldruckanlage mittels der Tintenauftragswerke, die zum Aufbringen der Drucktinten unterschiedlicher Farbe verwendet werden, die jeweilige Drucktinten auf eine Übertragungswalze aufgebracht, die dann die Tinte auf die zu bedruckende Oberfläche überträgt.

Aus der EP 4 216 531 A1 ist ein Verfahren zum Bedrucken einer Papierbahn mit einem Druckmotiv mittels einer Digitaldruckanlage bekannt. Dabei werden zunächst ein Referenzdekormuster, das einen Ausschnitt eines digitalen Abbildes des Urmusters des Druckmotivs enthält, sowie ein hyperspektraler Referenz-Datensatz zu dem Referenzdekormuster bereitgestellt. Anschließend wird ein Exemplar des Referenzdekormusters gedruckt und ein hyperspektraler Datensatz zu dem gedruckten Exemplar erstellt. Referenzexemplar und das gedruckte Exemplar werden dazu als Ganzes imprägniert und auf einem Kern verpresst und anschließend auf Farbtreue und Reproduzierbarkeit überprüft.

Aus der nachveröffentlichten EP 24173562.0 ist ein Verfahren zum Drucken eines zu druckenden Dekors auf eine Mehrzahl von Druck-Oberflächen mittels einer digitalen Druckanlage bekannt, umfassend Bestimmen eines ersten Dekors als ein zu druckendes Dekor, Bereitstellen einer digitalen Vorlage und von Referenz-Messdaten des zu druckenden Dekors, Drucken des zu druckenden Dekors anhand der digitalen Vorlage auf eine Druck-Oberfläche mit Druckeinstellungen der digitalen Druckanlage, Messen von Messgrößen des auf die Druck-Oberfläche gedruckten Dekors, so dass Druck-Messdaten erhalten werden, Vergleichen der Druck-Messdaten mit den Referenz-Messdaten und Ermitteln eines Maßes einer Abweichung der Druck-Messdaten von den Referenz-Messdaten, Ändern der Druckeinstellungen der digitalen Druckanlage, falls das Maß der Abweichung wenigstens ein vorbestimmtes Kriterium erfüllt, Wiederholen der Schritte, falls das Maß der Abweichung das wenigstens eine vorbestimmte Kriterium erfüllt.

Beim industriellen Digitaldruck in der Holzwerkstoffindustrie werden regelmäßig neue Holz, Stein- und Fantasiedekore benötigt. Die Basis für die Druckproduktion sind Dekordatensätze. Die Daten werden in einer sehr guten und fehlerfreien Qualität benötigt. Die Dekordaten entstehen meist aus gescannten oder anderweitig digitalisierten Echtmaterial wie Holz, Stein, Stoff etc. Teilweise wird das Material dafür im Vorfeld in Werkstätten handwerklich umfangreich aufbereitet, um bestimmte Effekte zu erreichen. (zB. Porenfärbung, schleifen, used-look, Farbtönung ect.)

Nachteilig hierbei ist, dass die für das Echtmaterial benötigten Scanner aus der Digitalisierungstechnik sehr hohe Investitionskosten erfordern und darüber hinaus gut ausgebildetes Personal zur Bedienung dieser Vorrichtungen benötigt werden, was sich insbesondere für Kleinserien nicht rentiert. Darüber hinaus werden Natürliche Ressourcen benötigt, um die Echtmaterialen bereitzustellen und in Werkstätten inklusive entsprechender Maschinen zu lagern. Auch das vorherige handwerkliche aufbereiten der Echtmaterialen ist sehr zeitaufwendig und kostenintensiv.

Darüber hinaus ist für die Aufbereitung der Dekorrohdaten, die aus der Digitalisierung der Echtmaterialen gewonnen werden, viel Personalzeit und Ressourcen notwendig, um Materiallücken zu schließen, Fehler zu retuschieren, an Wünsche anzupassen sowie Dielenübergänge und Raporte zu retuschieren, so dass keine Kanten mehr enthalten sind. Dadurch ergibt sich eine insgesamt sehr lange Dekorentwicklungszeit, die bis zum druckfertigen Dekor bis zu 6 Wochen dauern kann.

Es ist Aufgabe der vorliegenden Erfindung ein verbessertes Verfahren zum Erstellen von Fertigungsdaten zur Herstellung von die koren in der Holzwerkstoffindustrie anzugeben.

Die Aufgabe wird mit dem Verfahren gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Verfahren zum Erstellen von Fertigungsdaten zur Herstellung eines Dekors auf einer Holzwerkstoffplatte vorgeschlagen, wobei das Verfahren die folgenden Schritte umfasst:
- Bereitstellen eines maschinellen Lernsystems, das einen Zusammenhang von mindestens einer Dekoreigenschaft als Eingabedaten und Dekorbilddaten als Ausgabedaten maschinell gelernt hat, auf einer Datenverarbeitungsanlage,
- Bereitstellen von mindestens einer gewünschten Dekoreigenschaft des herzustellenden Dekors auf der Datenverarbeitungsanlage,
- Eingeben der mindestens einen bereitgestellten Dekoreigenschaft als Eingabedaten in das auf der Datenverarbeitungsanlage bereitgestellten maschinellen Lernsystem und Erhalten von Dekorbilddaten als Ausgabedaten aus dem maschinellen Lernsystem in Reaktion auf die Eingabe, und
- Erstellen von Fertigungsdaten zur Herstellung des Dekors in Abhängigkeit von den erhaltenen Dekorbilddaten.

Demnach wird zunächst ein maschinelles Lernsystem bereitgestellt, welches durch entsprechende Trainingsdaten trainiert und eine Eingabeschnittstelle besitzt, mit der Eingabedaten in das maschinelle Lernsystem eingegeben werden können. Basierend auf den Eingabedaten, die sich auf mehrere Eingabekanäle des maschinellen Lernsystems verteilen können, erzeugt das trainierte maschinelle Lernsystem entsprechende Ausgabedaten, die ebenfalls auf mehrere Ausgabekanäle des maschinellen Lernsystems verteilt werden können.

Ein solches maschinelles Lernsystem hat dabei den Zusammenhang von mindestens einer Dekoreigenschaft als Eingabedaten und entsprechenden Dekorbilddaten hierzu als Ausgabedaten gelernt. Ein solches maschinelles Lernsystem, wie es hier vorgeschlagen wird, kann beispielsweise ein künstliches neuronales Netz sein, welches über eine Eingabeschicht zur Eingabe der Eingabedaten und eine Ausgabeschicht zur Ausgabe der Ausgabedaten und eine Vielzahl von dazwischenliegenden Zwischenschichten hat, welche die Eingabeschicht über gewichtete Knotenverbindungen mit der Ausgabeschicht verbindet.

Ein solches maschinelles Lernsystem wird dabei in der Regel mit einer Vielzahl von bekannten Bilddaten gelernt, wobei mindestens eine entsprechende Dekoreigenschaft mit den entsprechenden Bilddaten korreliert ist. Hierdurch wird der Zusammenhang zwischen den tatsächlichen Bilddaten und den vorzugsweise mehreren Dekoreigenschaften gelernt, sodass durch Vorgabe einer entsprechenden Dekoreigenschaft, vorzugsweise mehrerer Dekoreigenschaften das maschinelle Lernsystem künstliche Dekorbilddaten für ein Dekor einer Holzwerkstoffplatte generieren kann.

Die Bereitstellung des gelernten maschinellen Lernsystems erfolgt temporär oder dauerhaft auf einer Datenverarbeitungsanlage.

Auf der Datenverarbeitungsanlage wird nun mindestens eine Dekoreigenschaft, vorzugsweise mehrerer Dekoreigenschaften, bereitgestellt, die das herzustellende Dekor beschreiben. Diese Beschreibung kann dabei eine textuelle Dekoreigenschaft sein. Denkbar ist auch, dass die Beschreibung durch Vorgabe von visuellen Dekoreigenschaften, beispielsweise in Form von Bild und/oder Videodaten, bereitgestellt wird, was in der Breite der vorliegenden Erfindung als Dekoreigenschaften subsumiert wird.

Das maschinelle Lernsystem kann dabei mit einem LLM (large language model), insbesondere mit einem intermodalen LLM gekoppelt oder integriert sein, um die Dekoreigenschaften in Form von textuellen und/oder visuellen Vorgaben eingeben zu können.

Die Bereitstellung der Dekoreigenschaften erfolgt dabei insbesondere durch eine Eingabe der Dekoreigenschaften an einer Computereinheit. Diese Computereinheit weist gattungsgemäß Eingabegeräte wie Maus und Tastatur, eine Recheneinheit sowie eine Ausgabeeinheit in Form von einem oder mehreren Displays auf. Die Computereinheit kann mit der Datenverarbeitungsanlage, auf der das maschinelle Lernsystem bereitgestellt wird, signaltechnisch verbunden sein. Denkbar ist aber auch, dass die Computereinheit Teil der Datenverarbeitungsanlage mit dem maschinellen Lernsystem ist. Durch Eingabe der Dekoreigenschaften an der Computereinheit werden diese dann der Datenverarbeitungsanlage mit dem maschinellen Lernsystem bereitgestellt.

Die bereitgestellten Dekoreigenschaften werden nun als Eingabedaten in das maschinelle Lernsystem eingegeben, um künstliche Dekorbilddaten als Ausgabedaten aus dem maschinellen Lernsystem in Reaktion auf die Eingabe zu generieren.

Basierend auf den generierten künstlichen Dekorbilddaten, die durch das maschinelle Lernsystem generiert wurden, werden nun mithilfe der Datenverarbeitungsanlage oder einer anderen Recheneinheit, die mit der Datenverarbeitungsanlage verbunden ist, die Fertigungsdaten erstellt, um basierend auf diesen Fertigungsdaten dann ein Dekor auf einer Holzwerkstoffplatte erzeugen zu können.

Die Fertigungsdaten sind ausschließlich dazu vorgesehen, eine Dekordruckvorrichtung so anzusteuern, dass basierend auf den Fertigungsdaten ein Dekor für eine Holzwerkstoffplatte gedruckt werden kann, wobei das Dekor auf den generierten künstlichen Dekorbilddaten basiert.

Dabei kann das Dekor, welches auf den künstlich generierten Dekorbilddaten basiert, direkt auf die Holzwerkstoffplatte gedruckt werden. Denkbar ist aber auch, dass das Dekor mithilfe der Fertigungsdaten auf eine Papierbahn gedruckt wird, die dann anschließend auf der Holzwerkstoffplatte verklebt wird.

Mithilfe der vorliegenden Erfindung wird es möglich, Dekore für Holzwerkstoffplatten, insbesondere für Fußbodenpaneele, künstlich zu generieren, ohne dass hierfür zuvor auf bestehendes und verfügbares Echtmaterial zurückgegriffen werden kann. Es wurde überraschenderweise festgestellt, dass mithilfe eines maschinellen Lernsystems entsprechende Dekorbilddaten generiert werden können, die für Dekore von Fußbodenpaneelen verwendet werden können, ohne dass hierbei insbesondere erkennbar wird, dass das Dekor nicht auf einem eingescannte Echtmaterial zurückzuführen ist.

Hierdurch lassen sich die aus dem Stand der Technik und in der Praxis bekannten Nachteile bei der Produktion von Holzwerkstoffplatten mit individuellen Dekoren weitestgehend und im Wesentlichen eliminieren.

Gemäß einer Ausführungsform ist vorgesehen, dass ein maschinelles Lernsystem bereitgestellt wird, das einen Zusammenhang von einem Materialtyp einer Materialnachbildung für ein Dekor, einer Farbeigenschaft für Dekors, Helligkeitseigenschaften für ein Dekor, einer geographischen Region, einer Stilrichtung, eine Musterraportinformation und/oder Bilddaten als Dekoreigenschaft einerseits und Dekorbilddaten andererseits maschinell gelernt hat, wobei mindestens eine dieser Dekoreigenschaften als Eingabedaten bereitgestellt und in das maschinelle Lernsystem eingegeben werden.

Der Materialtyp einer Materialnachbildung für ein Dekor kann bspw. die Materialart wie Holz, Parkett, Laminat, Stein, Mamor, etc. sein. Eine Farbeigenschaft kann allgemein eine oder mehrere gewünschte Farben (bspw. angegeben in RAL) oder eine Farbtendenz sein. Eine Helligkeitseigenschaft gibt an, ob das Dekor er in hellen Farben oder ehr in dunklen Farbtönen ausgestaltet sein soll.

Unter einer grafischen Region wird dabei eine Angabe über die Herkunft des künstlich nachgebildeten Echheitsmaterial verstanden. So kann beispielsweise eine Angabe über die geographischen Region Nordamerikas i.V.m. dem Materialtyp Holz zu entsprechend heimischen Holznachbildungen dieser Region führen.

Auch eine bestimmte Stilrichtung, wie beispielsweise Modern oder Landhaus kann als eine Dekoreigenschaften verwendet werden.

Schließlich ist es auch denkbar, dass bestimmte, bereits bekannte Bilddaten als Dekoreigenschaften vorgegeben werden, wobei das maschinelle Lernsystem dann künstlich basierend auf diesen Bilddaten eigene Dekore nachbildet.

Dabei ist es denkbar, dass die Datenverarbeitungsanlage unter Vorgabe von Dekoreigenschaften in einer mit der Datenverarbeitungsanlage verbunden Datenbank nach entsprechende Bilddaten als Dekoreigenschaften sucht und diese dann dem maschinellen Lernsystem automatisch als Grundlage für die Generierung der Dekor bereitstellt.

Gemäß einer Ausführungsform ist vorgesehen, dass die Bilddaten zumindest bereichsweise Dekorbilddaten existierender Dekore beinhalten.

Bei dieser Ausführungsform wird das künstlich zu generierende Dekor auf Basis von Bilddaten erzeugt, dass zumindest bereichsweise bekannte, existierende Dekore beinhaltet. Dadurch wird erreicht, dass die bekannten, existierenden Dekore als Grundlage verwendet werden und die künstlich generierten Dekore somit Abwandlungen der bekannten Dekore sind.

Gemäß einer Ausführungsform ist vorgesehen, dass die Bilddaten zumindest bereichsweise Dekorbilddaten existierender Dekore derart beinhalten, dass das existierende Dekor um ein Vielfaches erweitert wird.

Bei dieser Ausführungsform werden die bekannten Bilddaten um ein Vielfaches erweitert und anschließend basierend darauf dann das künstlich zu generierende Dekor mithilfe des maschinellen Lernsystems erstellt.

Gemäß einer Ausführungsform ist vorgesehen, dass die Bilddaten zumindest bereichsweise künstliche grafische Elemente und/oder Muster beinhalten.

Solche künstlichen grafischen Elemente oder Muster können beispielsweise Ornamente und/oder Tribals sein.

Gemäß einer Ausführungsform ist vorgesehen, dass basierend auf einem Aktivierungssignal die Datenverarbeitungsanlage automatisch mindestens eine über ein Netzwerk verfügbare Dekoreigenschaft ermittelt und für das Erstellen der Fertigungsdaten bereitstellt.

Bei dieser Ausführungsform sucht die Datenverarbeitungsanlage in einem verbundenen Netzwerk nach geeigneten Dekoreigenschaften, bspw. durch eine Trendsuche in den Sozialen Medien. Die dabei ermittelte Dekoreigenschaft wird dann für das Erstellen der Fertigungsdaten als Eingangsdaten des maschinellen Lernsystems bereitgestellt. Solche über ein Netzwerk verfügbaren Dekoreigenschaften können bspw. Bilddaten sein, die derzeit aktuelle Trends bei Fußbodenpanelen darstellen. Denkbar ist aber auch, dass solche Dekoreigenschaften als Bilddaten bei Fußbodenpanelherstellern ermittelt und bereitgestellt werden. Solche aus einem Netzwerk (bspw. Internet) ermittelten Dekoreigenschaften können zur Verarbeitung durch das maschinelle Lernsystem noch weiter vorbereitet werden.

Gemäß einer Ausführungsform ist vorgesehen, dass basierend auf einem Aktivierungssignal die Datenverarbeitungsanlage automatisch über ein Netzwerk verfügbare Farb- und/oder Materialinformationen ermittelt und aus den ermittelten Farb- und/oder Materialinformationen dann automatisch mindestens eine Dekoreigenschaft erstellt und für das Erstellen der Fertigungsdaten bereitstellt.

Hierbei werden Farb- und/oder Materialinformationen bspw. bei einer Trendsuche in einem großen Netzwerk ermittelt, so dass aus diesen Farb- und/oder Materialinformationen dann die für die Verarbeitung im maschinellen Lernsystem notwendigen Dekoreigenschaften erstellt werden können. Solche Farb- und/oder Materialinformationen können bspw. bei einer Trendsuche in den Sozialen Medien ermittelt werden.

Das Aktivierungssignal kann dabei eine einfache Starteingabe darstellen. Denkbar ist aber auch, dass das Aktivierungssignal eine Suchvorgabe enthält, die bspw. durch eine Benutzereingabe vorgegeben wird. Die Datenverarbeitungsanlage sucht dann in Abhängigkeit von der Suchvorgabe die Dekoreigenschaften bzw. die Farb- und/oder Materialinformationen. Die Benutzereingabe kann dabei bspw. in textueller Form erfolgen, wobei die Analyse der Benutzereingabe zum Erstellen der Suchvorgabe durch ein LLM (Großes Sprachmodell - Large Language Model) erfolgen kann.

Gemäß einer weiteren Ausführungsform ist vorgesehen, dass für das Erstellen von Fertigungsdaten die künstlich generierten Dekorbilddaten, die von dem maschinellen Lernsystem erhalten wurde, mithilfe eines zweiten maschinellen Lernsystems künstlich auf eine höhere Ausgabequalität hochskaliert wird, in dem beispielsweise die Druckqualität auf eine minimale Auflösung (bspw. mindestens 300dpi) künstlich hochskaliert wird. Dies kann beispielsweise mithilfe bekannter KI-gestützter Upscaling-Verfahren erfolgen. Dies hat den Vorteil, dass das maschinelle Lernsystem, welches das künstlich generierte Dekor bereitstellt, hinsichtlich der Ausgabekanäle auf eine geringere Auflösung beschränkt sein kann, da die Auflösung zum Zwecke des Druckes des Dekors hochskaliert wird.

Ein weiterer Aspekt der vorliegenden Erfindung ist im Übrigen auch ein Computerprogramm mit Programmcodemitteln, eingerichtet zur Durchführung des Verfahrens wie vorstehend beschrieben, wenn das Computerprogramm auf einer Datenverarbeitungsanlage ausgeführt wird.

Ein weiterer Aspekt der vorliegenden Erfindung ist eine Vorrichtung, ein computerlesbares Speichermedium mit einem solchen Computerprogramm, ein Datenstrom, welcher das Computerprogramm repräsentiert sowie eine technische bzw. technisch wirksame Datenstruktur, die durch Ausführung des Computerprogramms erzeugt wird.

Ein weiterer Aspekt der vorliegenden Erfindung ist ein Verfahren zur Herstellung einer Holzwerkstoffplatte mit einem Dekor, indem Fertigungsdaten zur Herstellung des Dekors mittels des Verfahrens wie vorstehend beschrieben erstellt und in Abhängigkeit von den Fertigungsdaten mittels einer Fertigungsanlage das Dekor hergestellt wird.

Das Erstellen des Dekors mithilfe der zuvor erzeugten Fertigungsdaten kann dabei beispielsweise dadurch erfolgen, dass mithilfe der Fertigungsdaten das Dekor gedruckt wird, beispielsweise auf eine Papierbahn, die anschließend auf die Holzwerkstoffplatte aufgeklebt wird, oder direkt auf die Holzwerkstoffplatte selbst.

Die Erfindung wird anhand der beigefügten Figur beispielhaft näher erläutert. Es zeigen:
- Figur 1: schematischer Verfahrensablauf der Erfindung;
- Figur 2: schematische Darstellung des Aufbaus zur Durchführung des erfindungsgemäßen Verfahrens.

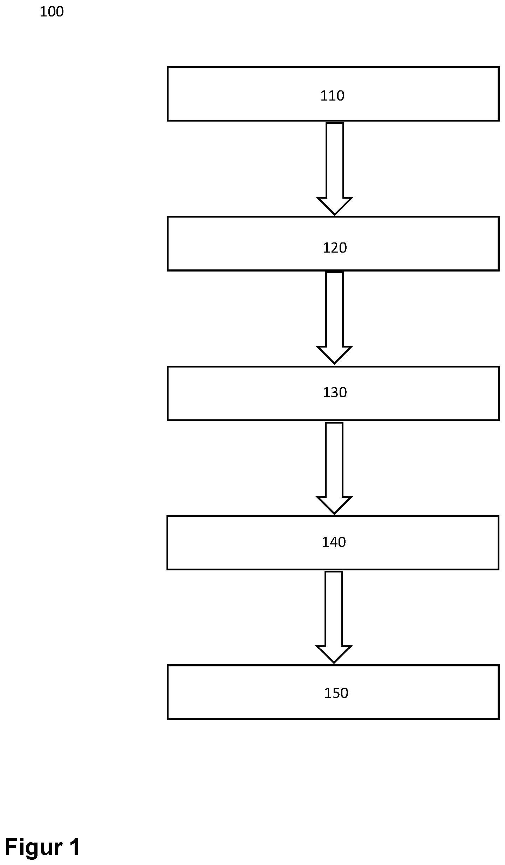

Figur 1 zeigt schematisch den Verfahrensablauf zur Herstellung einer Holzwerkstoffplatte. Im ersten Schritt 110 wird auf einer Datenverarbeitungsanlage ein maschinelles Lernsystem bereitgestellt, das einen Zusammenhang von mindestens einer Dekoreigenschaft als Eingabedaten und Dekorbilddaten als Ausgabedaten maschinell gelernt hat.

Im zweiten Schritt 120 wird sodann auf dieser Datenverarbeitungsanlage mindestens eine Dekoreigenschaften, vorzugsweise mehrere Dekoreigenschaften, als Eingabedaten bereitgestellt, die dann im dritten Schritt 130 in das im ersten Schritt 110 bereitgestellte maschinelle Lernsystem eingegeben werden. Aus der Eingabe dieser Dekoreigenschaften als Eingabedaten werden Dekorbilddaten als Ausgabedaten erhalten.

Im vierten Schritt 140 wird aus den künstlich generierten Dekorbilddaten des maschinellen Lernsystems, die im vorherigen Schritt 130 erhalten wurden, entsprechende Fertigungsdaten zur Herstellung des Dekors erstellt.

Anschließend wird im fünften Schritt 150 sodann die Holzwerkstoffplatte mit dem künstlich generierten Dekor hergestellt.

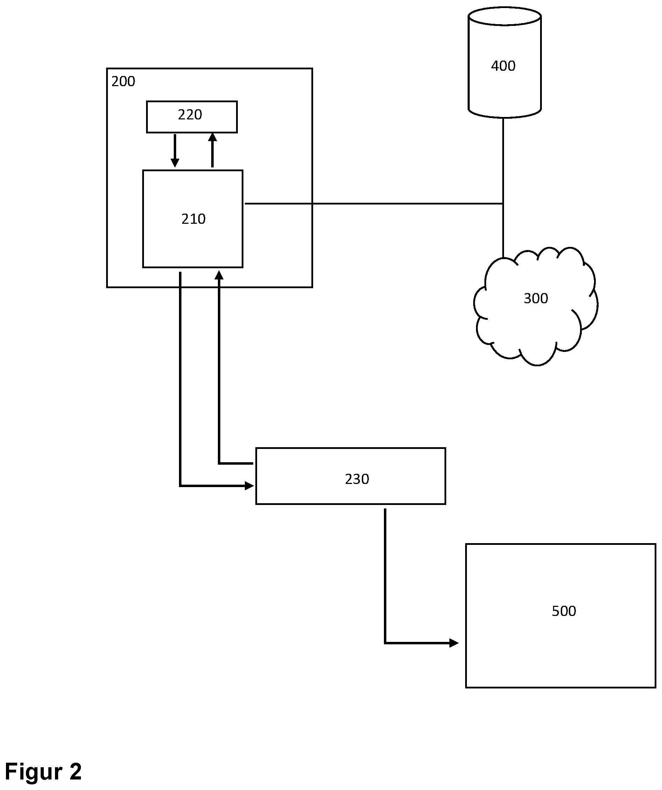

Figur 2 zeigt schematisch den Aufbau zur Durchführung des erfindungsgemäßen Verfahrens. Auf einer Datenverarbeitungsanlage 200 existiert eine elektronische Recheneinheit 210, auf der ein maschinelles Lernsystem 220 ausführbar ist.

An einer mit der Datenverarbeitungsanlage verbunden Computereinheit 230 werden nun Dekoreigenschaften eingegeben, die das künstlich zu generierende Dekor textuell und/oder visuell beschreiben.

Die Datenverarbeitungsanlage 200 empfängt nun die Dekoreigenschaften von der Computereinheit 230 und kann entweder aus Quellen innerhalb eines globalen Netzwerkes 300 und/oder aus einem Datenspeicher 400 weitere Materialeigenschaften ermitteln. So ist es denkbar, dass basierend auf den Dekoreigenschaften aus Quellen innerhalb des globalen Netzwerkes 300 Bilddaten ermittelt werden, die den genannten Eigenschaften entsprechen. Solche Bilddaten oder zusätzliche Informationen sind dann ebenfalls Dekoreigenschaften im Sinne der vorliegenden Erfindung.

Die Dekoreigenschaften werden nun als Eingabedaten dem maschinellen Lernsystem 220 bereitgestellt. Basierend darauf wird dann aus dem maschinellen Lernsystem 220 als Ausgabedaten entsprechende Dekorbilddaten generiert, die der elektronischen Recheneinheit 210 bereitgestellt werden.

Aus diesen Dekorbilddaten, die von dem maschinellen Lernsystem 220 generiert wurden, werden nun Fertigungsdaten generiert, die beispielsweise an die Computereinheit 230 übertragen werden können. Von dort können die Fertigungsdaten dann einer Herstellungsanlage 500 bereitgestellt werden, um die Holzwerkstoffplatte mit dem künstlich generierten Dekor herzustellen.

Figur 2 zeigt die grundlegende Systemarchitektur, die verwendet werden kann, um einen oder mehrere der hierin beschriebenen Aspekte in einer eigenständigen und/oder vernetzten Umgebung zu implementieren. Verschiedene Netzwerkknoten, wie z. B. die Datenverarbeitungsanlage, der Webserver, der Computer und der Laptop, können über ein Netzwerk (LAN, WLAN, WAN), wie z. B. das Internet, miteinander verbunden werden. Es können auch alternativ oder zusätzlich andere Netzwerke verwendet werden, einschließlich privater Intranets,

Unternehmensnetzwerke, LANs, Metropolitan Area Networks (MANs), drahtlose Netzwerke, persönliche Netzwerke (PANs) und dergleichen. Ein lokales Netzwerk (LAN) kann eine oder mehrere der bekannten LAN-Topologien aufweisen und eines oder mehrere verschiedene Protokolle verwenden, wie z. B. Ethernet. Geräte, Datenverarbeitungsanlage, Webserver, Computer, Laptops und andere Geräte können über verdrillte Zweidrahtleitungen, Koaxialkabel, Glasfaser, Funkwellen oder andere Kommunikationsmedien mit einem oder mehreren der Netzwerke verbunden werden.

Computersoftware, Computerhardware und Computernetzwerke können in einer Vielzahl unterschiedlicher Systemumgebungen eingesetzt werden, darunter unter anderem eigenständige, vernetzte, Remote-Access- (auch Remote-Desktop genannt), virtualisierte und/oder cloud-basierte Umgebungen.

Der Begriff "Netzwerk", wie er hier verwendet wird, bezieht sich nicht nur auf Systeme, in denen entfernte Speichergeräte über einen oder mehrere Kommunikationspfade miteinander verbunden sind, sondern auch auf eigenständige Geräte, die von Zeit zu Zeit mit solchen Systemen verbunden werden können, die über Speicherkapazität verfügen. Folglich umfasst der Begriff "Netzwerk" nicht nur ein "physisches Netzwerk", sondern auch ein "Inhaltsnetzwerk", das aus den Daten besteht, die einer einzelnen Entität zugeordnet werden können und sich über alle physischen Netzwerke hinweg befinden.

Die Datenverarbeitungsanlage kann ferner einen RAM, einen ROM, eine Netzwerkschnittstelle, Eingabe-/Ausgabeschnittstellen (z. B. Tastatur, Maus, Bildschirm, Drucker usw.) und einen Speicher umfassen. Die Eingabe-/Ausgabeschnittstellen können eine Vielzahl von Schnittstelleneinheiten und Laufwerken zum Lesen, Schreiben, Anzeigen und/oder Drucken von Daten oder Dateien umfassen. Der Speicher kann außerdem Betriebssystemsoftware zur Steuerung des Gesamtbetriebs der Datenverarbeitungsanlage, Steuerlogik zur Anweisung der Datenverarbeitungsanlage, hier beschriebene Aspekte auszuführen, und andere Anwendungssoftware speichern, die sekundäre, unterstützende und/oder andere Funktionen bereitstellt, die in Verbindung mit hier beschriebenen Aspekten verwendet werden können oder nicht. Die Funktionalität der Software kann sich auf Vorgänge oder Entscheidungen beziehen, die automatisch auf der Grundlage von in der Steuerlogik codierten Regeln getroffen werden, manuell von einem Benutzer getroffen werden, der Eingaben in das System vornimmt, und/oder eine Kombination aus automatischer Verarbeitung auf der Grundlage von Benutzereingaben (z. B. Abfragen, Datenaktualisierungen usw.) darstellen. Speicher kann auch Daten speichern, die bei der Ausführung eines oder mehrerer der hier beschriebenen Aspekte verwendet werden, einschließlich mindestens einer Datenbank. In einigen Ausführungsformen können auch zwei, drei oder mehrere Datenbanken parallel oder ineinander verschachtelt vorgesehen sein. Das heißt, die Informationen können in einer einzigen Datenbank gespeichert oder in verschiedene logische, virtuelle oder physische Datenbanken aufgeteilt werden, je nach Systemdesign.

Die Datenverarbeitungsanlage kann dabei direkt mit einer Anlage zur Herstellung eines Endproduktes verbunden sein. Die Datenverarbeitungsanlage erzeugt hierbei entsprechende Anweisungen zur Ansteuerung einer oder mehrerer Maschinen der Anlage. Die Datenverarbeitungsanlage kann aber auch mittels einer Netzwerkschnittstelle mit der Anlage verbunden sein, die dann bspw. mit dem Netzwerk 708 verbunden ist.

Ein oder mehrere Aspekte können in computerlesbaren oder -verwertbaren Daten und/oder computerausführbaren Anweisungen enthalten sein, wie z. B. in einem oder mehreren Programmmodulen, die von einem oder mehreren Computern oder anderen Geräten ausgeführt werden, wie hier beschrieben. Im Allgemeinen enthalten Programmmodule Routinen, Programme, Objekte, Komponenten, Datenstrukturen usw., die bestimmte Aufgaben ausführen oder bestimmte abstrakte Datentypen implementieren, wenn sie von einem Prozessor in einem Computer oder einem anderen Gerät ausgeführt werden. Die Module können in einer Quellcode-Programmiersprache geschrieben sein, die anschließend zur Ausführung kompiliert wird, oder sie können in einer Skriptsprache wie (aber nicht beschränkt auf) HTML oder XML geschrieben sein. Die ausführbaren Anweisungen des Computers können auf einem computerlesbaren Medium wie einem nichtflüchtigen Speichergerät gespeichert werden. Es können alle geeigneten computerlesbaren Speichermedien verwendet werden, einschließlich Festplatten, CD-ROMs, optische Speichergeräte, magnetische Speichergeräte und/oder eine beliebige Kombination davon. Darüber hinaus können verschiedene Übertragungsmedien (keine Speichermedien), die Daten oder Ereignisse wie hier beschrieben darstellen, zwischen einer Quelle und einem Ziel in Form von elektromagnetischen Wellen übertragen werden, die durch signalleitende Medien wie Metalldrähte, optische Fasern und/oder drahtlose Übertragungsmedien (z. B. Luft und/oder Weltraum) übertragen werden.

Verschiedene hier beschriebene Aspekte können als Verfahren, Datenverarbeitungssystem oder Computerprogrammprodukt verkörpert werden. Daher können verschiedene Funktionalitäten ganz oder teilweise in Software, Firmware und/oder Hardware oder Hardware-Äquivalenten wie integrierten Schaltkreisen, Field Programmable Gate Arrays (FPGA) und dergleichen enthalten sein. Bestimmte Datenstrukturen können verwendet werden, um einen oder mehrere 35 der hierin beschriebenen Aspekte effektiver umzusetzen, und solche Datenstrukturen werden im Rahmen der hierin beschriebenen ausführbaren Computeranweisungen und computerverwertbaren Daten in Betracht gezogen.

### Bezugszeichenliste

200 Datenverarbeitungsanlage
210 elektronische Recheneinheit der Datenverarbeitungsanlage
220 maschinelles Lernsystem
230 Computereinheit
300 globales Netzwerk
400 (externer) Datenspeicher
500 Fertigungsanlage

## Patentansprüche

1. Verfahren zum Erstellen von Fertigungsdaten zur Herstellung eines Dekors auf einer Holzwerkstoffplatte, wobei das Verfahren die folgenden Schritte umfasst:
- Bereitstellen eines maschinellen Lernsystems (220), das einen Zusammenhang von mindestens einer Dekoreigenschaft als Eingabedaten und Dekorbilddaten als Ausgabedaten maschinell gelernt hat, auf einer Datenverarbeitungsanlage (200),
- Bereitstellen von mindestens einer gewünschten Dekoreigenschaft des herzustellenden Dekors auf der Datenverarbeitungsanlage (200),
- Eingeben der mindestens einen bereitgestellten Dekoreigenschaft als Eingabedaten in das auf der Datenverarbeitungsanlage (200) bereitgestellten maschinellen Lernsystem (220) und Erhalten von Dekorbilddaten als Ausgabedaten aus dem maschinellen Lernsystem (220) in Reaktion auf die Eingabe, und
- Erstellen von Fertigungsdaten zur Herstellung des Dekors in Abhängigkeit von den erhaltenen Dekorbilddaten.

2. Verfahren nach Anspruch 1, **dadurch gekennzeichnet, dass** ein maschinelles Lernsystem (220) bereitgestellt wird, das einen Zusammenhang von einem Materialtyp einer Materialnachbildung für ein Dekor, einer Farbeigenschaft für Dekors, Helligkeitseigenschaften für ein Dekor, einer geographischen Region, einer Stilrichtung, eine Musterraportinformation und/oder Bilddaten als Dekoreigenschaft einerseits und Dekorbilddaten andererseits maschinell gelernt hat, wobei mindestens eine dieser Dekoreigenschaften als Eingabedaten bereitgestellt und in das maschinelle Lernsystem (220) eingegeben werden.

3. Verfahren nach Anspruch 2, **dadurch gekennzeichnet, dass** die Bilddaten zumindest bereichsweise Dekorbilddaten existierender Dekore beinhalten.

4. Verfahren nach Anspruch 3, **dadurch gekennzeichnet, dass** die Bilddaten zumindest bereichsweise Dekorbilddaten existierender Dekore derart beinhalten, dass das existierende Dekor um ein Vielfaches erweitert wird.

5. Verfahren nach einem der Ansprüche 2 bis 4, **dadurch gekennzeichnet, dass** die Bilddaten zumindest bereichsweise künstliche grafische Elemente und/oder Muster beinhalten.

6. Verfahren nach einem der vorhergehenden Ansprüche, **dadurch gekennzeichnet, dass** basierend auf einem Aktivierungssignal die Datenverarbeitungsanlage (200) automatisch mindestens eine über ein Netzwerk (300) verfügbare Dekoreigenschaft ermittelt und für das Erstellen der Fertigungsdaten bereitstellt.

7. Verfahren nach einem der vorhergehenden Ansprüche, **dadurch gekennzeichnet, dass** basierend auf einem Aktivierungssignal die Datenverarbeitungsanlage (200) automatisch über ein Netzwerk (300) verfügbare Farb- und/oder Materialinformationen ermittelt und aus den ermittelten Farb- und/oder Materialinformationen dann automatisch mindestens eine Dekoreigenschaft erstellt und für das Erstellen der Fertigungsdaten bereitstellt.

8. Verfahren nach einem der vorhergehenden Ansprüche, **dadurch gekennzeichnet, dass** für das Erstellen von Fertigungsdaten die künstlich generierten Dekorbilddaten, die von dem maschinellen Lernsystem (220) erhalten wurde, mithilfe eines zweiten maschinellen Lernsystems (220) künstlich auf eine höhere Ausgabequalität hochskaliert werden.

9. Computerprogramm mit Programmcodemitteln, eingerichtet zur Durchführung des Verfahrens gemäß einem der Ansprüche 1 bis 8, wenn das Computerprogramm auf einer Datenverarbeitungsanlage (200) ausgeführt wird.

10. Vorrichtung zur Datenverarbeitung, umfassend Mittel zur Ausführung des Verfahrens gemäß einem der Ansprüche 1 bis 8.

11. Computerlesbares Speichermedium mit dem Computerprogramm gemäß Anspruch 9.

12. Datenstrom, der das Computerprogramm gemäß Anspruch 9 repräsentiert.

13. Technische bzw. technisch wirksame Datenstruktur, die durch Ausführung des Computerprogramms gemäß Anspruch 9 erzeugt wurde.

14. Verfahren zur Herstellung einer Holzwerkstoffplatte mit einem Dekor, indem Fertigungsdaten zur Herstellung des Dekors mittels des Verfahrens gemäß einem der Ansprüche 1 bis 8 erstellt und in Abhängigkeit von den Fertigungsdaten mittels einer Fertigungsanlage (500) das Dekor hergestellt wird.
